# EUROPÄISCHE PATENTSCHRIFT

(11) **EP 0 563 375 B1**
(45) Veröffentlichungstag und Bekanntmachung des Hinweises auf die Patenterteilung: **28.02.1996**
(21) Anmeldenummer: 93908757.3
(22) Anmeldetag: 20.10.1992
(51) Int. Cl.: B29C 41/04, B29C 41/36

(54) **VERFAHREN ZUR HERSTELLUNG VON ARMIERTEN DUROPLASTROHREN IM SCHLEUDERVERFAHREN UND ANLAGE ZUR DURCHFÜHRUNG DES VERFAHRENS**
PROCESS AND PLANT FOR MANUFACTURING REINFORCED DUROPLASTIC TUBES BY CENTRIFUGAL CASTING
PROCEDE ET INSTALLATION DE FABRICATION DE TUYAUX EN RESINE THERMODURCISSABLE ARMEE PAR CENTRIFUGATION

(30) Priorität: 23.10.1991 CH 3096/91
(43) Veröffentlichungstag der Anmeldung: 06.10.1993
(73) Patentinhaber: Hobas Engineering AG, CH-4054 Basel (CH)
(72) Erfinder: JOST, Ralf, CH-4414 Füllinsdorf (CH); RATHEISER, Reinhart, A-9334 Guttaring (AT)
(74) Vertreter: Eder, Carl E.
(86) Internationale Anmeldenummer: CH9200212
(87) Internationale Veröffentlichungsnummer: WO9308009

(56) Entgegenhaltungen:
- EP-A- 0 360 758
- CH-A- 404 182
- DE-A- 1 779 980
- DE-A- 2 921 652
- DE-A- 3 110 092
- FR-A- 2 241 407

## Beschreibung

Es ist eine Anlage zum Herstellen von armierten Duroplastrohren, also Rohren aus einem Harz, dem ein Füllstoff beigemischt sein kann, dem zugehörigen Katalysator, sowie Einlagen aus Glasfasern und einem Sand im Schleuderverfahren bekannt. Diese bekannte Anlage weist einen mit einem Beschickungsarm versehenen Einspritzwagen auf, der in der Art eines Lagerkrans an einem in der Höhe, d.h. auf zwei auf je einer Säulenreihe angeordneten Schienen verfahrbaren Gestell hängt und der, abgesehen vom flüssigen Harz, alle für die Beschickung der sich drehenden, zylindrischen Matrize nötigen Ausgangsmaterialien enthält, nämlich 1 1/2 bis 3 m³ Sand, die Glasfasern und den flüssigen Katalysator. Zum Nachfüllen des Sandes muss der Wagen an eine spezielle Beladestelle verfahren und dort gefüllt werden, was stets einen beträchtlichen Betriebsunterbruch zur Folge hat. Für die Zuleitung der elektrischen Energie, die zum Antrieb des Fahrwerks, der Flüssigkeitspumpen, der Zuführvorrichtung für den Sand, die Schneidevorrichtung für die Glasfasern und das Zuführen derselben ins innere der Matrize benötigt wird, dienen für jede der beiden Verschiebevorrichtungen geschleppte Kabel, die zwar sowohl in der Anschaffung wie auch im Unterhalt kostspielig sind, die sich aber durch nichts Preiswertes ersetzen lassen.

Der Oberbegriff des Anspruchs 1 basiert auf der DE-A- 31 10 092.

Bei der Herstellung eines Rohres werden die einzelnen dem Rohraufbau dienenden Komponenten, also das flüssige Harz, das einen feinen Füllstoff enthalten kann, der entsprechende Katalysator, die Glasfasern und der Sand aus der am freien Ende des Beschickungsarmes vorhandenen Ausgabemündung in eine sich drehende trommelförmige Matrize eingebracht, wobei je nach dem gewünschten Aufbau die entsprechende Matrizendrehzahl, die Vorschubgeschwindigkeit des Einspritzwagens und die Fördermenge der einzelnen Komponenten gewählt werden. Bei der sorgfältigen Qualitätskontrolle der mit diesen bekannten Anlagen hergestellten Rohre wurden geringe Schwankungen in der Gleichmässigkeit des Wandaufbaus und zwar im wesentlichen eine Ungleichmässigkeit der Sandverteilung, sowohl in bezug auf die Dichte wie auch auf die Körnung, festgestellt. Obwohl diese Schwankungen unterhalb einer Toleranz liegen und daher unschädlich sind, sollte man sie zur Verbesserung der Qualität aber doch vermeiden. Da sie sich jedoch nicht systematisch reproduzieren liessen, war es nicht möglich, ihre Ursache festzustellen und sie zu eliminieren. Aufgrund minuziös durchgeführter Überlegungen und Zwischenmessungen konnte ermittelt werden, dass die Schwankungen in der Gleichmässigkeit der Sandkörnung, also die Anhäufung von grobkörnigem Sand an einzelne Stellen und von feinkörmigem Sand an anderen Stellen, wahrscheinlich durch eine durch Vibration des Sandbehälters erzeugte Entmischung des Sandes im Sandbehälter bedingt sind und dass die Unregelmässigkeiten in der Verteilung des Sandes an sich ihre Ursache darin haben könnte, dass die Höhe der Ausgabemündung des Beschickungsarmes des Einspritzwagens nicht konstant ist.

Mit der vorliegenden Erfindung sollen nun diese Nachteile behoben werden. Das ist einerseits möglich durch ein neues Verfahren, dass dadurch gekennzeichnet ist, dass man den Sand aus einem feststehenden Silo kontinuierlich einem im Einspritzwagen angeordneten Zwischenbehälter zuführt und ihn von dort gemäss dem auf den gewünschten Rohraufbau abgestimmten Herstellungsprogramm in die Matrize einbringt.

In der Anlage nach der vorliegenden Erfindung wurden zwar grundlegende Ideen aus der bekannten Anlage übernommen, ihre Ausgestaltung ist aber wesentlich vorteilhafter, so dass sich zusätzlich zur beabsichtigten Qaulitätsverbesserung auch noch eine Reduktion der Anschaffungskosten für die Anlage wie auch ihrer Unterhaltskosten und zudem wegen der wesentlich kürzeren Stillstandszeiten eine nicht unbeträchtlich höhere Produktionsleistung erreichen liess.

Die erfindungsgemässe neue Anlage ist nun dadurch gekennzeichnet,
a) dass der Einspritzwagen auf einem in der Richtung quer zur Matrizenachse auf dem Gebäudeboden verfahrbaren Gestell steht und auf diesem quer zu dessen Fahrrichtung verfahrbar ist,
b) dass der Wagen einen Arbeitssilo für den Sand mit einem Volumen von 150 bis 500 Liter enthält,
c) dass oberhalb des Gebäudebodens ein über eine erste Schlauchleitung mit dem Arbeitssilo verbundener Gross-Silo angeordnet ist, aus welchem der Sand mit Druckluft in den Arbeitssilo gefördert wird,
d) dass eine Fördereinrichtung zum Füllen des Gross-Silos vorhanden ist,
e) dass sowohl der Arbeitssilo wie auch der Gross-Silo mit Gewichtsmesszellen ausgerüstet ist und
f) dass ein Rechen- und Steuergerät vorhanden ist, welches
   - die zum Füllen des Gross-Silos dienende Fördereinrichtung einschaltet, wenn ein eingestelltes Gewichts- oder Volumenminimum erreicht ist, und sie ausschaltet, wenn ein eingestelltes Gewichts- oder Volumenmaximum erreicht ist, sie aber in der Zeit blockiert, während welcher Sand in die Matrize eingebracht wird,
   - die Vorschubgeschwindigkeit des Einspritzwagens gemäss einem vorgegebenen Programm steuert, und zwar vorzugsweise so, dass die maximal auftretenden Beschleunigungen unter dem Wert bleiben, der eine Entmischung des Sandes im Arbeitssilo zur Folge haben könnte,
   - dauernd die Gewichte von Gross-Silo und Arbeitssilo misst und sie addiert,
   - die Abnahme dieses Gesamtgewichtes bei jedem Einbringen von Sand in die Matrize misst und
   - die Förder- und Dosieranlage für den Sand bei jeder Sandabgabe so steuert, dass die spezifische Abgabemenge, also die Abgabemenge pro Zeiteinheit, und die zeitliche Dauer der einzelnen Beschickung gemäss dem vorgegebenen Programm erfolgt.

Nachfolgend wird anhand der beiliegenden Zeichnung ein Ausführungsbeispiel der Erfindung beschrieben. In der Zeichnung zeigt:
die Figur 1 eine rein schematische Draufsicht auf eine erfindungsgemässe Anlage mit vier Matrizen und einen Einspritzwagen,
die Figur 2 eine gleiche Darstellung, wobei sich der Einspritzwagen jedoch in einer anderen Stellung befindet,
die Figur 3 eine Seitenansicht der Anlage,
die Figur 4 eine Seitenansicht des Einspritzwagens in grösserem Massstab.

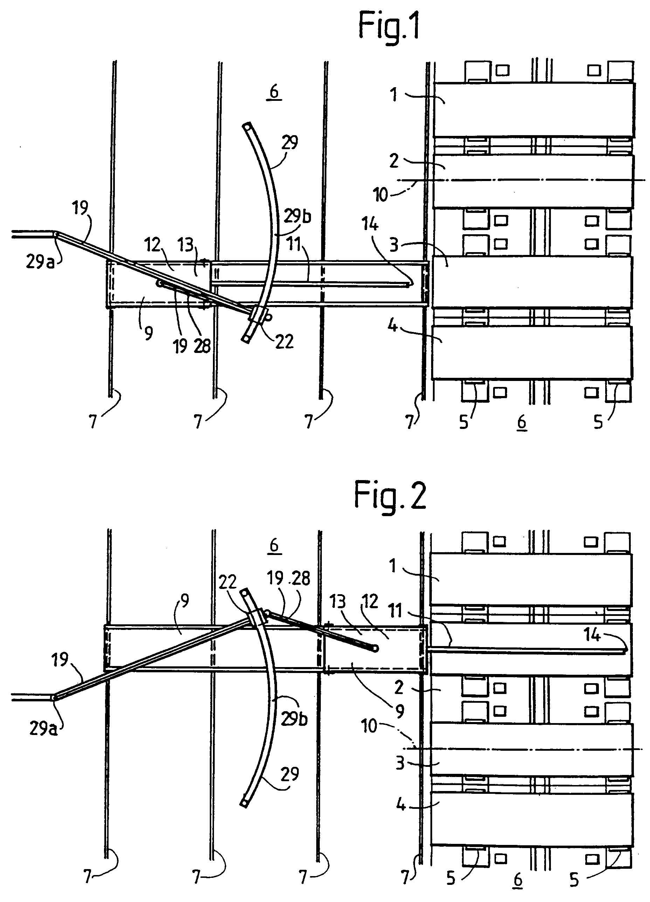

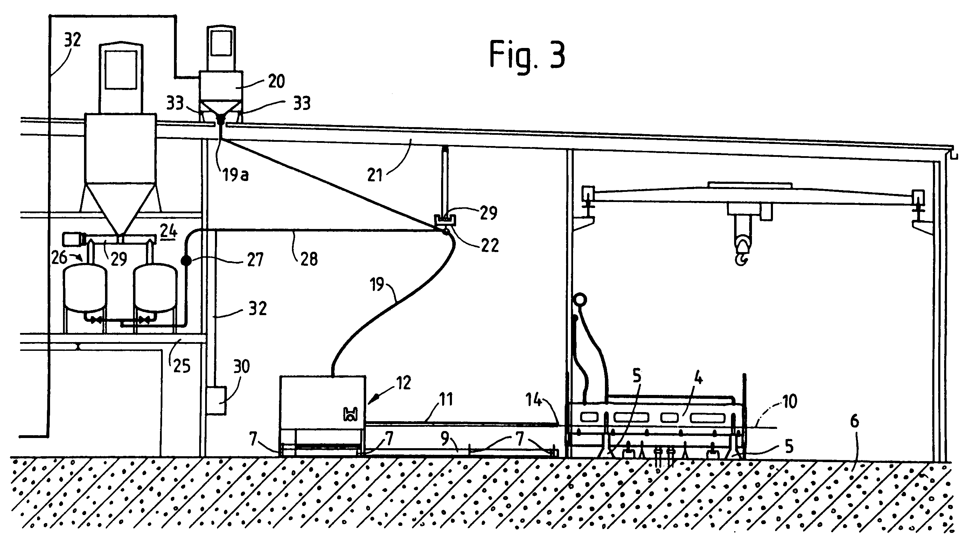

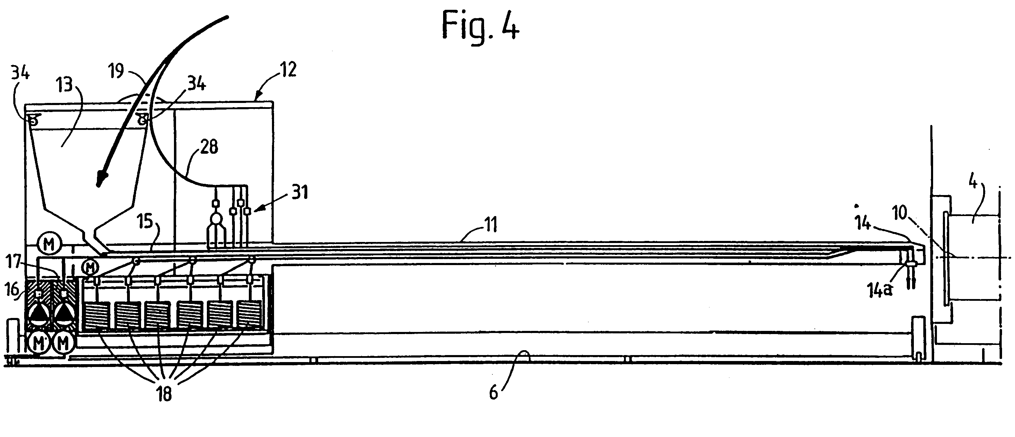

Die in den Figuren 1 bis 3 dargestellte Anlage weist vier Schleudertrommeln 1, 2, 3, und 4 zur Herstellung von Kunststoffrohren auf. Auch wenn diese Trommeln in der Zeichnung alle den gleichen Durchmesser haben, ist es ohne weiteres möglich, Schleudertrommeln mit unterschiedlichem Durchmesser nebeneinander anzuordnen. Diese Schleudertrommeln sind auf rein schematisch gezeichneten Lagern 5 drehbar gelagert. Nicht dargestellte Motoren dienen dazu, diese Trommeln mit der gewünschten Tourenzahl rotieren zu lassen. Die Lager 5 stehen, wie das aus der Figur 3 ersichtlich ist, auf dem Boden 6 der Fabrikationshalle. Auf diesem gleichen Boden 6 sind auch zwei oder mehr Schienen 7 für die in der Zeichnung nicht sichtbaren Räder des Fahrgestells 9 angebracht oder in diesen eingelassen. Dadurch ist das mit motorisch angetriebenen Rädern versehen Fahrgestell 9 in einer Richtung quer zur Richtung der Trommelachse 10 verschiebbar. Auf diesem Fahrgestell 9 steht der als Ganzes mit 12 bezeichnete, mit einem Beschickungsarm 11 versehene Einspritzwagen. Dieser ist mit ebenfalls motorisch angetriebenen Rädern auf dem Fahrgestell 9 in dessen Längsrichtung, also in der Richtung der Trommelachse 10 verschiebbar. Er enthält, wie aus der Figur 4 ersichtlich ist, einen kleinen, d.h. 150 bis 500 Liter fassenden, als Zwischenbehälter dienenden Arbeitssilo 13 für den Sand sowie eine mit einem Motor variabler Drehzahl versehene, als Dosiereinrichtung ausgebildete, in der Zeichnung nur durch zwei gerade Striche wiedergegebene, sich bis zum freien Ende 14 des Beschickungsarmes 11 erstreckende Förderschnecke 15, um den Sand vom Arbeitssilo 13 zur Ausgabemündung 14a des Armes 11 zu fördern. Der Wagen enthält des weitern zwei je mit einer Dosierpumpe versehene Katalysatorbehälter 16 und 17 sowie die Glasfaserspulen 18. Im freien Ende 14 des Beschickungsarmes befindet sich eine mit rotierenden Schneidemessern versehene Vorrichtung, um die Glasfaserschnüre je nach Bedarf mit einer grösseren oder kleineren Geschwindigkeit zum freien Ende zu ziehen und dort in Stücke der benötigten Länge zu schneiden. Dadurch, dass das Gestell 9 auf dem Boden steht, wo es auf zwei oder drei oder auch auf vier Schienen verfahrbar ist, wird verhindert, dass es sich in der Mitte nach unten durchbiegen kann. Dadurch, dass der Einspritzwagen wegen des kleineren Sandbehälters wesentlich leichter ist als bei der bis jetzt bekannten Anlage, ist eine Durchbiegung auch bei der Verwendung von nur zwei Schienen 7 wesentlich geringer als bei den bekannten Anlagen. Das Durchbiegen des Gestells 9 hatte nämlich nicht nur zur Folge, dass sich die Höhenlage des freien Endes 14 des Beschickungsarmes 11 mit der Ausgabemündung 14a beim Verschieben des Einspritzwagens 12 auf seinem Fahrgestell 9 ändert, sondern auch die zusätzliche Folge, dass diese Anderung vom momentanen Füllstand, d.h. dem Gewicht des Einspritzwagens abhängig war. Nachdem einmal erkannt worden war, dass gewisse Unregelmässigkeiten auf diese unperiodischen Änderungen zurückzuführen waren, liessen sie sich durch die neue Anordnung vollständig eliminieren.

Ein weiterer, nämlich der wesentliche, Schritt zur Vermeidung sporadisch auftretender Präzisionsabweichungen liess sich dadurch ereichen, dass bei der erfindungsgemässen Anlage der Einspritzwagen 12 nur einen Zwischenbehälter für den Sand, nämlich den verhältnismässig kleinen Arbeitssilo 13 enthält, also einen Behälter mit einem Volumen von 150 bis 500 Litern, und dass er über eine Schlauchleitung 19 mit einem in einem höheren Stockwerk, hier also auf der Decke 21, feststehenden Gross-Silo 20 verbunden ist, aus welchem der Sand mit Druckluft kontinuierlich in den Arbeitssilo 13 gefördert wird. Die Transportluft kann durch eine parallel zur Schlauchleitung 19 angeordnete Schlauchleitung zum Gross-Silo zurückströmen. Dadurch dass nun der Sand sich nur kurzzeitig in dem als Zwischenbehälter dienenden Arbeitssilo befindet, wird eine Entmischung vermieden, was durch Überprüfung des Endproduktes festgestellt wurde.

Der Gross-Silo 20 seinerseits ist mit einer Fördereinrichtung versehen, die in der Fig. 3 rein schematisch als Leitung 32 dargestellt ist und bei der es sich um irgendeine an sich bekannte Sandfördereinrichtung, also beispielsweise ein Transportband oder eine mit Druckluft betriebene Fördereinrichtung oder eine noch anders ausgestaltete Vorrichtung handeln kann. Sowohl der Gross-Silo 20 wie auch der Arbeitssilo 13 sind mit Gewichtsmesszellen ausgerüstet, wobei die ersten mit 33 und die andern mit 34 bezeichnet sind. Mit 30 ist ein Rechen- und Steuergerät bezeichnet, das die vorgenannte zum Füllen des Gross-Silos 20 dienende Fördereinrichtung 32 einschaltet, wenn ein einstellbares Gewichts- oder Volumenminimum erreicht wird, und sie ausschaltet, wenn ein einstellbares Gewichts- oder Volumenmaximum erreicht wird, sie aber während der Zeit blockiert, während welcher durch die Förderschnecke 15 Sand in eine der sich drehenden Matrizen eingebracht wird. Dieses Rechen- und Steuergerät dient auch dazu, die Vorschubgeschwindigkeit des Einspritzwagens 12 gemäss einem vorgegebenen Programm zu steuern, wobei das Programm natürlich für die Herstellung eines Rohres mit einem ganz bestimmten Schichtaufbau ausgestaltet ist. Des weitern dient das Rechen- und Steuergerät dazu, dauernd die Gewichte des Gross-Silos und des Arbeitssilos zu messen und die beiden Gewichte zu addieren sowie die Abnahme dieses Gesamtgewichtes bei jedem Einbringen von Sand in die Matrize zu messen und dann entsprechend dem vorgenannten Programm die Förder- und Dosieranlage, also im vorliegenden Fall die Förderschnecke 15, bei jeder Sandabgabe so zu steuern, dass die spezifische Abgabemenge, also die Abgabemenge pro Zeiteinheit, und auch die zeitliche Dauer der einzelnen Sandbeschickung gemäss dem vorgegebenen Programm erfolgt.

Aus dem erfindungsgemässen Verfahren und der erfindungsgemässen Anordnung ergeben sich die folgenden Vorteile:
1. Es wird eine Entmischung des Sandes dadurch vermieden, dass er so gefördert und gelagert wird, dass keine Möglichkeit zur Entmischung mehr besteht, wodurch im Endprodukt eine absolute Homogenität der Sandverteilung gewährleistet ist.
2. Der Einspritzwagen ist dadurch, dass er nur höchstens 500 Liter Sand fassen kann, wesentlich leichter, als ein Einspritzwagen, der 1 1/2 oder sogar bis zu 3 m³ Sand enthält. Dadurch wird zum Anfahren des Wagens und zum Abbremsen wesentlich weniger Energie benötigt.
3. Es lässt sich dadurch, dass sich das Gewicht des Einspritzwagens wegen der konstanten Sandzufuhr höchstens unwesentlich ändert, die Geschwindigkeitsänderung am Anfang und am Ende jeder Verschiebebewegung genau reproduzierbar steuern, was eine grössere Genauigkeit und Gleichmässigkeit bei der Verteilung aller Bestandteile und damit bei der Rohrherstellung zur Folge hat.
4. Es entfallen die früher für das Auffüllen des im Einspritzwagen untergebrachten Behälters nötigen Stillstandzeiten, da es vom Gross-Silo 20 her jederzeit nachgefüllt wird, unabhängig davon, in welchem Betriebszustand sich der Einspritzwagen 12 befindet.
All diese Vorteile, mit denen sich gegenüber den Produktionsverfahren mit den alten Anlagen ein qualitativ wesentlich verbessertes Produkt herstellen lässt, sind im nachhinein ohne weiteres einleuchtend und offensichtlich, obwohl es fast unmöglich war, die Ursache für die sporadisch auftretenden Unregelmässigkeiten bei den mit den bekannten Verfahren und Anlagen hergestellten Rohren zu ermitteln.

Wie man aus der Fig. 3 ersehen kann, ist die Schlauchleitung 19 an einem Träger 22 befestigt, der hier als an einer horizontalen, im Abstand von der Decke 21 an dieser aufgehängten Laufschiene 29 hängendes Laufwerk ausgebildet ist. Die Laufschiene 29 ist, wie man aus den Figuren 1 und 2 ersehen kann, derart kreisförmig gebogen, dass ihr Zentrum 29a unterhalb der Stelle 19a liegt, an welcher die Schlauchleitung 19 das Gross-Silo 20 verlässt. Sie ist im übrigen so angeordnet, dass sich die Schienenmitte 29b im Gebiet oberhalb des Zentrums zwischen zwei extremen Stellungen des Einspritzwagens 12 befindet. Natürlich könnte die konkrete Ausgestaltung des Trägers 22 etwas anders ausgebildet sein. Wie man aus den Figuren 1 und 2 ersehen kann, ist es auf diese Art und Weise ohne weiteres möglich, den Träger 22 derart zu verschieben, dass eine kontinuierliche Beschickung des Arbeitssilos 13 im Einspritzwagen 12 möglich ist und zwar unabhängig davon, ob sich der Einspritzwagen in einer extremen Lage befindet, wie das in der Figur 1 dargestellt ist, oder in einer eher zentralen Lage, wie das in der Figur 2 dargestellt ist.

Aus der Figur 3 der Zeichnung ist des weitern ersichtlich, dass in einem Raum 24, dessen Boden 25 sich oberhalb des Gebäudebodens 6 befindet, ein Tank oder eine Tankanlage 26 für das Flüssigharz untergebracht ist. Diese Anlage kann, wie aus der Figur 3 ersichtlich ist, zusätzlich eine Mischstation 29 enthalten, mit welcher sich dem Flüssigharz feine Zusatzstoffe, wie etwa Calciumcarbonat, beimischen lassen. Eine elektrisch angetriebene, am Rechen- und Steuergerät 30 angeschlossene Förder- und Dosier-Pumpe 27 fördert das flüssige Harz durch eine zweite Schlauchleitung 28 zum Einspritzwagen 12. Diese zweite Schlauchleitung ist ebenfalls am Träger 22 befestigt und begleitet von dort an die erste Schlauchleitung 19 bis zum Einspritzwagen 12, wo durch weitere Steuerorgane 31 der Durchfluss zur Ausgabemündung 14 gesteuert wird. Dadurch, dass die Vorratsbehälter für das Flüssigharz nicht im Einspritzwagen untergebracht sind, ist es möglich, durch eine einfache Ventilbetätigung das Flüssigharz zu modifizieren oder ein anderes Flüssigharz zu verwenden, wodurch weitere Totzeiten vermieden werden können.

Gemeinsam mit den beiden Schlauchleitungen 19 und 28 sowie der Rückströmleitung für die dem Sandtransport dienende Luft kann man nun auch ohne jegliche zusätzliche Hilfsmittel die Steuerleitungen 32 aus dem Rechen- und Steuergerät 30 sowie ein oder mehrere elektrische Kabel zur Speisung aller im Einspritzwagen 12 untergebrachten Antriebsmotoren zum Einspritzwagen führen.

Wenn die in der Einleitung beschriebene Herstellung eines Kunststoffrohres beendigt ist, wird das an dem Ende der Schleudertrommel, das dem Einspritzwagen 12 abgewandt ist, vorhandene, beispielsweise durch eine Kreisringscheibe gebildete Trommelabschlussorgan entfernt, damit man das fertige Rohr dort aus der als Matrize dienenden Schleudertrommel herausziehen kann. Dadurch, dass man das Fertigrohr auf dieser Seite aus der Matrize entfernt, lässt sich ein sehr zweckmässiger Arbeitsablauf erreichen, ein Arbeitsablauf, bei welchem auf der einen Seite der Matrizen die Ausgangsmaterialien zugeführt werden, während auf der anderen Seite die Weiterverarbeitung der erzeugten Rohre, wie zum Beispiel das Ablängen, erfolgen kann.

## Patentansprüche

1. Verfahren zur Herstellung von Faser-armierten, Sand enthaltenden Duroplastrohren im Schleudergussverfahren, wobei die Kunststoffbestandteile, die Glasfasern und der Sand aus einem in der Achsrichtung des herzustellenden Rohres verfahrbaren Einspritzwagen (12) gemäss einem vom gewünschten Rohaufbau abhängigen Herstellungsprogramm in eine rotierende Matrize (1-4) eingebracht werden, dadurch gekennzeichnet, dass man den Sand aus einem feststehenden Silo (20) kontinuierlich einem im Einspritzwagen (12) angeordneten Zwischenbehälter (13) zuführt und ihn von dort gemäss dem Herstellungsprogramm in die Matrize (1-4) einbringt.

2. Verfahren nach Anspruch 1, dadurch gekennzeichnet, dass die Fahrgeschwindigkeit des den Zwischenbehälter (13) enthaltenden Einspritzwagens (12) derart gesteuert wird, dass seine Beschleunigung unter dem Wert bleibt, der eine Entmischung des Sandes im Zwischenbehälter (13) zur Folge haben könnte.

3. Anlage zum Herstellen von aus einem Duroplast, Füllmitteln, Sand und Glasfasern bestehenden Rohren im Schleuderverfahren gemäss dem Verfahren nach Anspruch 1, mit mindestens zwei zylindrischen, horizontalachsigen, auf einen Gebäudeboden (6) parallel zueinander stehenden, drehbar gelagerten, motorisch angetriebenen Matrizen (1, 2, 3, 4) und mit einem in einer zur Matrizenachse (10) parallelen und in einer dazu senkrechten Richtung horizontal verfahrbaren Einspritzwagen (12), der mit einem Beschickungsarm (11) versehen ist, dessen freies Ende (14) zur Abgabe des Harzes, das Füllmittel enthalten kann, eines Katalysators, des Sandes und der Glasfasern ausgebildet ist und der eine Förder- und Dosieranlage für den Sand enthält, wobei,
a) der Einspritzwagen (12) auf einem in der Richtung quer zur Matrizenachse (10) auf dem Gebäudeboden (6) verfahrbaren Gestell steht und auf diesem quer zu dessen Fahrrichtung verfahrbar ist,
b) der Wagen (12) einen Arbeitssilo (13) für den Sand mit einem Volumen von 150 bis 500 Liter enthält,
c) oberhalb des Gebäudebodens (6) ein mit Druckluft über eine erste Schlauchleitung (19) mit dem Arbeitssilo (13) verbundener Gross-Silo (20) angeordnet ist, aus welchem der Sand mit Druckluft in den Arbeitssilo (13) gefördert wird,
d) eine Fördereinrichtung zum Füllen des Gross-Silos vorhanden ist,
e) sowohl der Arbeitssilo (13) wie auch der Gross-Silo (20) mit Gewichtsmesszellen (33, 34) ausgerüstet ist und
f) ein Rechen- und Steuergerät (30) vorhanden ist, welches
- die zum Füllen des Gross-Silos (20) dienende Fördereinrichtung (32) einschaltet, wenn ein eingestelltes Gewichts- oder Volumenminimum erreicht ist, und sie ausschaltet, wenn ein eingestelltes Gewichts- oder Volumenmaximum erreicht ist, sie aber in der Zeit blockiert, während welcher Sand in die Matrize eingebracht wird,
- die Vorschubgeschwindigkeit des Einspritzwagens (12) gemäss einem vorgegebenen Programm steuert,
- dauernd die Gewichte von Gross-Silo (20) und Arbeitssilo (13) misst und sie addiert,
- die Abnahme dieses Gesamtgewichtes bei jedem Einbringen von Sand in die Matrize misst und
- die Förder- und Dosieranlage (15) für den Sand bei jeder Sandabgabe so steuert, dass die spezifische Abgabemenge, also die Abgabemenge pro Zeiteinheit, und die zeitliche Dauer der einzelnen Beschickung gemäss dem vorgegebenen Programm erfolgen.

4. Anlage nach Anspruch 3, dadurch gekennzeichnet, dass die Förder- und Dosieranlage einen mit einem Motor variabler Drehzahl versehenen Schneckenförderer (15) aufweist.

5. Anlage nach Anspruch 3 oder 4, dadurch gekennzeichnet, dass oberhalb des Gebäudebodens (6) ein über eine Dosierpumpe und eine zweite Schlauchleitung (28) mit dem Wagen verbundener Tank (26) für das Flüssigharz angeordnet ist.

6. Anlage nach einem der Ansprüche 3 bis 5, dadurch gekennzeichnet, dass zwischen dem Gross-Silo (20) und dem Arbeitssilo (13) ein horizontal verfahrbarer Träger (22) angeordnet ist, an welchem die zum Einspritzwagen (12) führenden Schlauchleitungen (19, 28) und eine zum Wagen (12) führende Energieleitung festgehalten werden.

7. Anlage nach einem der Ansprüche 3 bis 6, dadurch gekennzeichnet, dass jede Matrize (1, 2, 3, 4) auf der dem Einspritzwagen (12) abgewandten Seite mit einem wegnehmbaren Abschluss versehen ist, um ein in der Matrize hergestelltes Rohr nach dem Entfernen ihres Abschlusses dort aus der Matrize herauszuziehen.

8. Anlage nach Anspruch 6, dadurch gekennzeichnet, dass der horizontal verfahrbare Träger (22) ein an einer gebogenen Schiene (29) hängendes Laufwerk ist.

9. Anlage nach Anspruch 8, dadurch gekennzeichnet, dass die Schiene (29) derart kreisförmig gebogen ist, dass ihr Zentrum (29a) unterhalb der Stelle (19a) an welchem die erste Schlauchleitung den Gross-Silo verlässt, liegt und dass sich die Schienenmitte (29b) im Gebiet oberhalb des Zentrums zwischen den extremen Stellungen des Wagens befindet.

## Claims

1. Process for manufacturing fibre-reinforced thermoplastic plastics pipes containing sand in the centrifugal moulding process, in which the plastics components, the glass fibres and the sand are introduced from an injection carriage (12) displaceable in the axial direction of the pipe to be manufactured into a rotating mould (1-4) according to a production program dependent on the desired pipe composition, characterised in that the sand is fed continuously from a fixed bin (20) to an intermediate container (13) arranged in the injection carriage (12) and it is introduced from there into the mould (1-4) according to the production program.

2. Process according to claim 1, characterised in that the travel speed of the injection carriage (12) containing the intermediate container (13) is controlled in such a way that its acceleration remains below the value which might cause a separating out of the sand in the intermediate container (13).

3. Installation for manufacturing pipes consisting of a thermoplastic plastics material, fillers, sand and glass fibres in the centrifugal process in accordance with the process according to claim 1, with at least two cylindrical, horizontal-axis, rotatably mounted, motor-driven moulds (1, 2, 3, 4) standing parallel to each other on a building floor (6) and with an injection carriage (12) which is horizontally displaceable in a direction parallel to the mould axis (10) and in a direction perpendicular thereto and which is provided with a feed arm (11), the free end (14) of which is constructed for the delivery of the resin, which may contain filler, a catalyst, the sand and the glass fibres and which contains a conveying and metering installation for the sand, wherein,
a) the injection carriage (12) stands on a frame which is displaceable on the building floor (6) in the direction transverse to the mould axis (10) and is displaceable on the frame transversely to its direction of travel,
b) the carriage (12) contains a working bin (13) for the sand with a volume of 150 to 500 litres,
c) arranged above the building floor (6) and connected with the working bin (13) by compressed air via a first hose line (19) is a bulk bin (20), from which the sand is conveyed by compressed air into the working bin (13),
d) a conveying device for filling the bulk bin is present,
e) both the working bin (13) and the bulk bin (20) are equipped with weight measurement cells (33, 34) and
f) a calculating and control apparatus (30) is present, which
- switches on the conveying device (32), which serves for filling the bulk bin (20), when a preset weight or volume minimum is reached and switches it off when a preset weight or volume maximum is reached, but blocks it in the time during which sand is introduced into the mould,
- controls the advance speed of the injection carriage (12) according to a preset program,
- continuously measures the weights of the bulk bin (20) and the working bin (13) and adds them,
- measures the reduction of this total weight whenever sand is introduced into the mould and
- so controls the conveying and metering installation (15) for the sand on each sand delivery that the specific quantity delivered, thus the quantity delivered per unit of time, and the time duration of the individual feed operation takes place according to the preset program.

4. Installation according to claim 3, characterised in that the conveying and metering installation comprises a screw conveyor (15) provided with a motor of variable rotational speed.

5. Installation according to claim 3 or 4, characterised in that a tank (26), which is connected with the carriage by way of a metering pump and a second hose line (28) for the liquid resin is arranged above the building floor (6).

6. Installation according to one of claims 3 to 5, characterised in that a horizontally displaceable support (22) is arranged between the bulk bin (20) and the working bin (13), to which support the hose lines (19, 28) leading to the injection carriage (12) and an energy line leading to the carriage (12) are fixed.

7. Installation according to one of claims 3 to 6, characterised in that each mould (1, 2, 3, 4) is provided on the side furthest from the injection carriage (12) with a removable closure in order to withdraw there from the mould, after removal of its closure, a pipe made in the mould.

8. Installation according to claim 6, characterised in that the horizontally displaceable support (22) is a runner mechanism suspended at a curved rail (29).

9. Installation according to claim 8, characterised in that the rail (29) is circularly curved in such a way that its centre (29a) lies below the point (19a) at which the first hose line leaves the bulk bin, and so that the rail centre (29b) is disposed in the region above the centre between the extreme positions of the carriage.

## Revendications

1. Procédé pour fabriquer de tubes en résine thermodurcissable armés de fibres et contenant du sable, selon le procédé de coulée par centrifugation, des constituants de la matière plastique, les fibres de verre et le sable étant insérés depuis un chariot d'injection (12), déplacable dans la direction axiale du tube devant être fabriqué, dans une matrice rotative (1-4), conformément à un procédé de fabrication qui dépend de l'agencement désiré du tube, caractérisé en ce qu'on envoie en continu du sable à partir d'un silo fixe (20), à un récipient intermédiaire (13) disposé dans le chariot d'injection (12) et qu'on l'introduit, à partir de là, conformément au programme de fabrication, dans la matrice (1-4).

2. Procédé selon la revendication 1, caractérisé en ce qu'on commande la vitesse de déplacement du chariot d'injection (12), qui contient le récipient intermédiaire (13), de telle sorte que son accélération reste inférieure à une valeur qui pourrait entraîner une désagrégation du mélange du sable dans le récipient intermédiaire (13).

3. Installation pour fabriquer des tubes formés d'une résine thermodurcissable, d'une charge, de sable et de fibres de verre, selon le procédé sur centrifugation, conformément au procédé selon la revendication 1, comportant au moins deux matrices cylindriques (1, 2, 3, 4), dont les axes sont horizontaux, qui sont disposées parallèlement l'une à l'autre sur le sol (6) d'un bâtiment, sont montées de manière à pouvoir tourner et sont entraînées par un moteur, et un chariot d'injection (12), qui est parallèle à un axe (10) de la matrice et peut se déplacer horizontalement dans une direction perpendiculaire à cet axe et qui est pourvu d'un bras de chargement (11), dont l'extrémité libre (14) est agencée de manière à délivrer la résine, qui peut contenir une charge, d'un catalyseur, du sable et des fibres de verre et qui contient une installation d'entraînement et de dosage pour le sable, et dans laquelle
a) le chariot d'injection (12) est monté sur un châssis déplacable dans une direction transversale à l'axe (10) de la matrice, sur le sol (6) du bâtiment et peut être déplacé sur ce dernier transversalement par rapport à cette direction de déplacement, et
b) le chariot (12) contient un silo de travail (13) pour le sable, d'un volume de 150 à 500 litres,
c) au-dessus du sol (6) du bâtiment est disposé un silo de grande taille (20), qui est relié, moyennant l'application d'air comprimé, par l'intermédiaire d'un premier tuyau (19), au silo de travail (13) et à partir duquel le sable est envoyé à l'aide d'air comprimé dans le silo de travail (13),
d) un dispositif convoyeur est prévu pour remplir le silo de grande taille,
e) aussi bien le silo de travail (13) que le silo de grande taille (20) sont équipés de cellules de pesée (33,34), et
f) il est prévu un appareil de calcul et de commande (30) qui
- active le dispositif convoyeur (32), qui sert à remplir le silo de grande taille (20), lorsqu'un poids ou un volume minimum réglé est atteint, et le débranche, lorsqu'un poids ou volume maximum réglé est atteint, mais le bloque pendant la durée, pendant laquelle le sable est introduit dans la matrice,
- commande la vitesse d'avance du chariot d'injection (12) conformément à un programme prédéterminé,
- mesure en permanence les poids du silo de grande taille (20) et du silo de travail (13) et additionne ces poids,
- mesure la diminution de ce poids total lors de chaque introduction de sable dans la matrice, et
- commande l'installation de convoyage et de dosage (15) pour le sable lors de chaque délivrance de sable de sorte que la quantité spécifique délivrée, c'est-à-dire la quantité délivrée par unité de temps, et la durée du chargement individuel sont réglées en fonction du programme prédéterminé.

4. Installation selon la revendication 3, caractérisée en ce que l'installation de convoyage et de dosage possède un convoyeur à vis (15) équipé d'un moteur dont la vitesse de rotation est variable.

5. Installation suivant la revendication 3 ou 4, caractérisée par le fait qu'un réservoir (26) pour la résine liquide, qui est relié au chariot par l'intermédiaire d'une pompe de dosage et d'un second tuyau (28), est disposé au-dessus du sol (6) du bâtiment.

6. Installation suivant l'une des revendications 3 à 5, caractérisée en ce qu'entre le silo de grande taille (20) et le silo de travail (13) est disposé un support (22) déplaçable horizontalement, sur lequel les tuyaux (19,28), qui aboutissent au chariot d'injection (12), et une ligne d'alimentation en énergie aboutissant au chariot (12) sont retenus de façon fixe.

7. Installation suivant l'une des revendications 3 à 6, caractérisée en ce que chaque matrice (1,2,3,4) comporte, sur le côté tourné à l'opposé du chariot d'injection (12), un dispositif de fermeture pouvant être écarté pour permettre le retrait d'un tube fabriqué dans la matrice, hors de cette matrice, après retrait du dispositif de fermeture de la matrice.

8. Installation selon la revendication 6, caractérisée en ce que le support déplaçable horizontalement (22) est un mécanisme convoyeur qui est suspendu à un rail coudé (29).

9. Installation selon la revendication 8, caractérisée en ce que le rail (29) est coudé en forme d'arc de cercle de telle sorte que son centre (29a) est situé au-dessous de l'emplacement (19a), au niveau duquel le premier tuyau part du silo de grande taille, et que le milieu (29b) du rail est situé dans la région située au-dessus du centre entre les positions extrêmes du chariot.
